# EUROPEAN PATENT APPLICATION

(11) **EP 4 636 605 A1**
(43) Date of publication of application: **22.10.2025**
(21) Application number: 22968805.6
(22) Date of filing: 19.12.2022
(51) Int. Cl.: G06F 16/176

(54) **SOFTWARE PACKAGE PARSING METHOD AND APPARATUS, AND VEHICLE**

(71) Applicant: Shenzhen Yinwang Intelligent Technologies Co., Ltd., Shenzhen, Guangdong 518110 (CN)
(72) Inventor: CHEN, Huan, Shenzhen, Guangdong 518129 (CN); WANG, Jiajia, Shenzhen, Guangdong 518129 (CN); CHEN, Weibiao, Shenzhen, Guangdong 518129 (CN)
(74) Representative: MERH-IP Matias Erny Reichl Hoffmann Patentanwälte PartG mbB
(86) International application number: PCT/CN2022/140103
(87) International publication number: WO 2024/130501

(57) **Abstract**

This application discloses a software package parsing method and apparatus, and a vehicle, to reduce application development difficulty, improve application deployment efficiency, and reduce labor costs. **In** this method, a first object obtains a software package; the first object parses the software package to obtain a directory; and the first object reads application data of the first object from the software package based on the directory, where the first object is any one of at least one object. Based on a software package format in this application, after obtaining the software package, any object may read, from the software package based on the directory, application data corresponding to the object. This can implement process-based, standardized, and automatic deployment of various applications in different processors or areas, thereby reducing application development difficulty, improving application deployment efficiency, and reducing labor costs.

## Description

### TECHNICAL FIELD

This application relates to the field of intelligent vehicle technologies, and in particular, to a software package parsing method and apparatus, and a vehicle.

### BACKGROUND

With development of intelligent driving, there is a consensus on an evolution direction of an electronic vehicle architecture from a distributed mode to a centralized mode. A basic idea of a centralized architecture is to centrally process functions of areas or area groups in a vehicle or centrally process functions at a vehicle level, so that a problem of excessive electronic control units (electronic control unit, ECU) in a distributed vehicle architecture can be resolved. The user-centered centralized architecture has advantages of hardware sharing, layered decoupling, continuous upgrade, and the like.

In the centralized electronic architecture, a vehicle-mounted computing platform connects to various elements such as sensors (for example, a lidar, a camera, and a millimeter-wave radar), peripheral devices (for example, a touchscreen, a microphone, and a speaker), control systems (for example, a steering unit and a throttle), and user interfaces (for example, a human-machine interface (human-machine interface, HMI)), to process data generated by these elements. Various application programs (referred to as applications below) access or control these elements via the vehicle-mounted computing platform. Different applications have different functional safety requirements on running environments. As a provider of a basic capability, the vehicle-mounted computing platform provides a customized capability to meet the functional safety requirements of the different applications. For example, the applications with different functional safety requirements are deployed in the running environments at different safety levels, to meet the functional safety requirements of the different applications.

In the conventional technology, when the applications are developed and deployed on the vehicle-mounted computing platform, the applications are manually adjusted and deployed one by one. Consequently, there are problems such as high application development difficulty, low application deployment efficiency, and high labor costs.

### SUMMARY

This application provides a software package parsing method and apparatus, and a vehicle, to reduce application development difficulty, improve application deployment efficiency, and reduce labor costs.

According to a first aspect, a software package parsing method is provided, including: A first object obtains a software package, where the software package includes a directory and application data of at least one object, the directory indicates a location, of application data of each object in the at least one object, in the software package, the application data includes an application set corresponding to the at least one object, related configuration information of the application set, and software data corresponding to each application in the application set, and the object includes a processor or an area; the first object parses the software package to obtain a directory; and the first object reads application data of the first object from the software package based on the directory, where the first object is any one of the at least one object.

The application set may be an application list, a file including application information, or data in another format.

An embodiment of this application provides a software package format. The software package format includes the directory and the application data of the at least one object. When developing and deploying an application, an application provider may package application data based on the software package format to form a software package. After obtaining the software package, any object may read application data corresponding to the object from the software package based on the directory. In this way, various applications may be deployed in different processors or areas on a computing platform in a process-based, standardized, and automatic manner, thereby reducing application development difficulty, improving application deployment efficiency, and reducing labor costs.

In a possible design, the directory includes a first-type directory and a second-type directory. The first-type directory includes indication information that points to the second-type directory of the first object, and the second-type directory includes the application data.

In this design manner, the first object may find the second-type directory of the first object based on the indication information in the first-type directory, and further obtain the application data of the first object based on the second-type directory of the first object. This improves efficiency of obtaining the application data, thereby improving application deployment efficiency.

In a possible design, before that the first object reads application data of the first object from the software package based on the directory, the first object further writes the indication information into the first-type directory based on a configuration of the first object.

In this design manner, the first-type directory does not need to be separately set for each object in the software package. Instead, the first-type directory is filled in by each object based on a configuration of the object after the object obtains the software package. This can effectively reduce data redundancy in the software package. In addition, the application provider or the application does not need to perceive which object or objects the application needs to be installed on. This can reduce the application development difficulty.

In a possible design, the second-type directory further includes indication information of a third-type directory of each object in the at least one object, and the third-type directory of each object points to software data of the object.

In this design manner, the first object may find the third-type directory of the first object based on the indication information in the second-type directory, and further obtain software data of the first object based on the third-type directory of the first object. This improves efficiency of obtaining the software data, thereby improving application deployment efficiency.

In a possible design, there are a plurality of objects in the at least one object, and at least two of the plurality of objects have a same third-type directory. In other words, indication information of third-type directories of at least two objects in the second-type directory is the same.

In this design manner, the software data placed in the software package may be used by the plurality of objects. This can effectively reduce data redundancy caused by distributing different software packages to different objects.

In a possible design, the indication information is a link or a pointer.

Certainly, this is merely an example rather than a limitation. During actual application, the indication information may alternatively be in another form.

In a possible design, the at least one object includes a plurality of areas, and different areas in the plurality of areas correspond to different safety levels.

In this design manner, different directories may be separately designed for the areas at the different safety levels for the software package, to meet development requirements of a plurality of functional safety applications at the same time.

In a possible design, the software package includes an app partition and a signature partition. The directory is located in the app partition, and the signature partition is used to store a signature. Correspondingly, the first object may further read the signature in the signature partition, and verify integrity and safety of the software package based on the signature.

In this design manner, the first object may install the application when determining that the software package is complete and safe. This can improve application deployment reliability.

In a possible design, the signature includes one or more of a platform signature, an application provider signature, and a user signature. The signature partition further includes information indicating a type and/or a size of the signature in the signature partition.

In this design manner, efficiency and accuracy of parsing the software package by the first object can be improved.

In a possible design, the object includes a processor on a vehicle-mounted computing platform or an area of the processor.

In other words, the technical solutions in embodiments of this application may be applied to application development and deployment scenarios on the vehicle-mounted computing platform. In this design manner, the vehicle-mounted computing platform may deploy various applications in different processors or different areas on the vehicle-mounted computing platform in a process-based, standardized, and automatic manner. This can reduce the application development difficulty for the vehicle-mounted computing platform, improve application deployment efficiency, and reduce labor costs.

According to a second aspect, a software package parsing apparatus is provided. The apparatus includes a module, a unit, or a technical means used to perform the method according to any one of the first aspect or the possible designs of the first aspect.

For example, the apparatus may include:
an obtaining module, configured to obtain a software package, where the software package includes a directory and application data of at least one object, the directory indicates a location of application data, of each object in the at least one object, in the software package, the application data includes an application set corresponding to the at least one object, related configuration information of the application set, and software data corresponding to each application in the application set, and the object includes a processor or an area; and
a processing module, configured to: parse the software package to obtain the directory, and read application data of the first object from the software package based on the directory, where the first object is any one of the at least one object.

In a possible design, the directory includes a first-type directory and a second-type directory. The first-type directory includes indication information that points to the second-type directory of the first object, and the second-type directory includes the application data.

In a possible design, the processing module is further configured to: before reading the application data of the first object from the software package based on the directory, write the indication information into the first-type directory based on a configuration of the first object.

In a possible design, the second-type directory further includes indication information of a third-type directory of each object in the at least one object, and the third-type directory of each object points to software data of the object.

In a possible design, there are a plurality of objects in the at least one object, and at least two of the plurality of objects have a same third-type directory.

In a possible design, the at least one object includes a plurality of areas, and different areas in the plurality of areas correspond to different safety levels.

In a possible design, the software package includes an app partition and a signature partition. The directory is located in the app partition, and the signature partition is used to store a signature. The processing module is further configured to: read the signature in the signature partition, and verify integrity and safety of the software package based on the signature.

In a possible design, the signature includes one or more of a platform signature, an application provider signature, and a user signature. The signature partition further includes information indicating a type and/or a size of the signature in the signature partition.

In a possible design, the object includes a processor on a vehicle-mounted computing platform or an area of the processor.

According to a third aspect, a processing apparatus is provided, including at least one processor and an interface circuit.

The interface circuit is configured to: receive a signal from another apparatus other than the apparatus and transmit the signal to the processor, or send a signal from the processor to another apparatus other than the apparatus. The processor is configured to implement the method according to any one of the first aspect or the possible designs of the first aspect by using a logic circuit or executing code instructions.

According to a fourth aspect, a terminal device is provided, including the apparatus according to any one of the second aspect or the possible designs of the second aspect.

Optionally, the terminal device is a vehicle-mounted terminal, a general-purpose computer, or a server.

According to a fifth aspect, a vehicle is provided, including the apparatus according to any one of the second aspect or the possible designs of the second aspect.

According to a sixth aspect, a computer-readable storage medium is provided. The readable storage medium is configured to store instructions, and when the instructions are executed, the method according to any one of the first aspect or the possible designs of the first aspect is implemented.

According to a seventh aspect, a computer program product is provided. The computer program product stores instructions, and when the instructions are run on a computer, the computer is enabled to perform the method according to any one of the first aspect or the possible designs of the first aspect.

For beneficial effects of the second aspect to the seventh aspect, refer to the beneficial effects of the corresponding designs of the first aspect. Details are not described again.

### BRIEF DESCRIPTION OF DRAWINGS

FIG. 1 is a diagram of an application scenario according to an embodiment of this application;
FIG. 2 is a diagram of a vehicle 100;
FIG. 3 is a flowchart of a software package parsing method according to an embodiment of this application;
FIG. 4A and FIG. 4B are a diagram of reading application data from a software package by different objects;
FIG. 5 is a diagram of a software package parsing apparatus 500 according to an embodiment of this application; and
FIG. 6 is a diagram of another software package parsing apparatus 600 according to an embodiment of this application.

### DESCRIPTION OF EMBODIMENTS

In this application, "at least one" means one or more, and "a plurality of" means two or more. The term "and/or" describes an association relationship for describing associated objects and indicates that three relationships may exist. For example, A and/or B may indicate the following three cases: Only A exists, both A and B exist, and only B exists. A and B each may be singular or plural. In the text descriptions of this application, the character "/" indicates an "or" relationship between the associated objects. In a formula in this application, the character "/" indicates a "division" relationship between the associated objects. "Including at least one of A, B, and C" may indicate: including A; including B; including C; including A and B; including A and C; including B and C; and including A, B, and C.

The technical solutions provided in embodiments of this application may be applied to an application development and/or deployment scenario of any centralized electronic architecture.

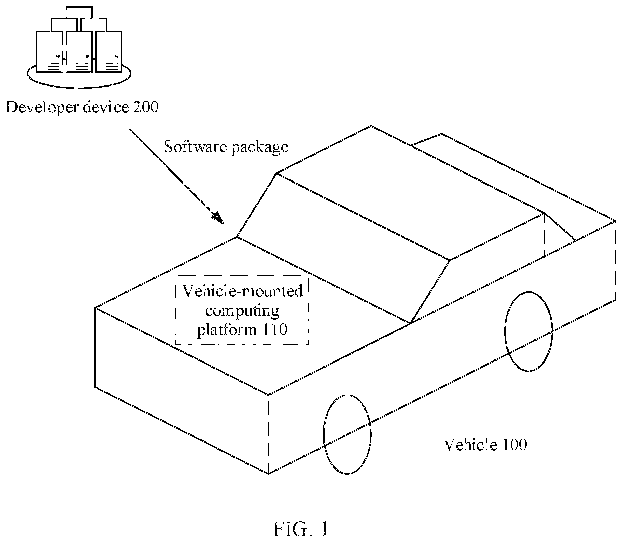

For example, FIG. 1 is a diagram of an application scenario according to an embodiment of this application. This scenario includes at least one developer (or referred to as an application provider) device 200 and a vehicle 100. The vehicle 100 is equipped with a vehicle-mounted computing platform 110, and any developer device 200 may deploy an application on the vehicle-mounted computing platform 110. For example, in an application deployment process, the developer device 200 sends a software package to the vehicle-mounted computing platform 110, and the vehicle-mounted computing platform 110 may parse the software package to obtain application data provided by the developer device 200, and install the application based on the application data. The vehicle-mounted computing platform 110 runs the application to access and control each element of the vehicle.

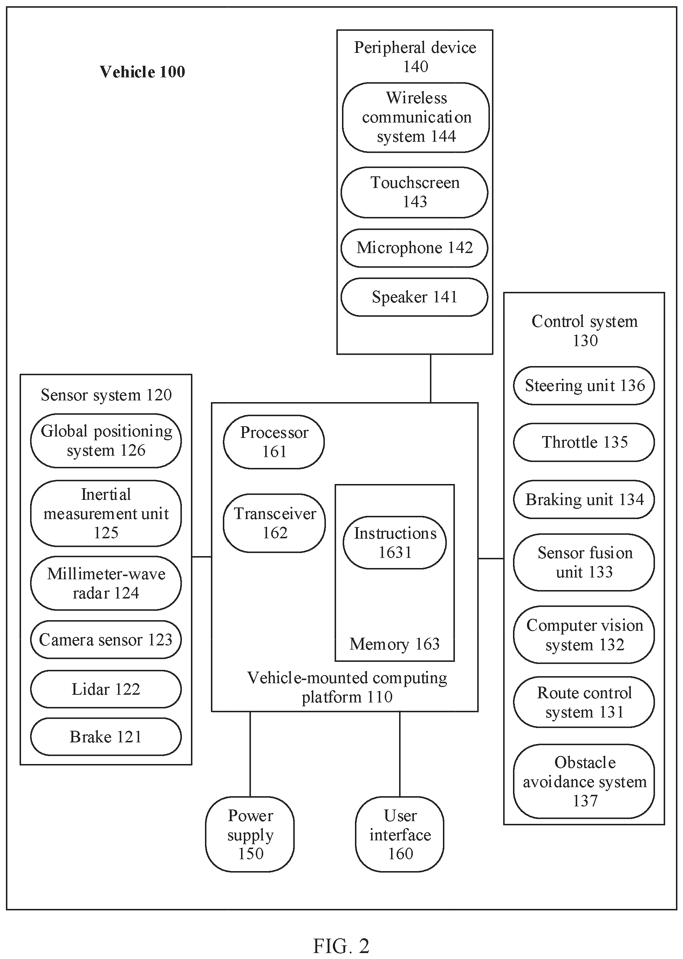

In an example, FIG. 2 is a diagram of a vehicle 100. The vehicle 100 includes a vehicle-mounted computing platform 110, a sensor system 120, a control system 130, a peripheral device 140, a power supply 150, a user interface 160, and the like. It should be noted that, in another example, the vehicle 100 may include more, fewer, or different systems, and each system may include more, fewer, or different components. In addition, the shown systems and components may be combined or split in any manner. This is not specifically limited in this application.

The sensor system 120 may include several sensors configured to sense information about an environment in which the vehicle 100 is located. As shown in FIG. 2, sensors in the sensor system 120 include a global positioning system (global positioning system, GPS) 126, an inertial measurement unit (inertial measurement unit, IMU) 125, a lidar 122, a camera sensor 123, a millimeter-wave radar 124, and a brake 121 for modifying a location and/or an orientation of a sensor. The millimeter-wave radar 124 may sense a target in an ambient environment of the vehicle 100 by using a radio signal. In some embodiments, in addition to sensing the target, the millimeter-wave radar 124 may be further configured to sense a speed and/or a heading direction of the target. The lidar 122 may sense, by using a laser, the target in the environment in which the vehicle 100 is located. In some embodiments, the lidar 122 may include one or more laser sources, a laser scanner, one or more detectors, and another system component. The camera sensor 123 may be configured to capture a plurality of images of the ambient environment of the vehicle 100. The camera sensor 123 may be a still camera or a video camera.

The control system 130 is configured to control operations of the vehicle 100 and operations of components of the vehicle 100. The control system 130 may include various elements including a steering unit 136, a throttle 135, a braking unit 134, a sensor fusion unit 133, a computer vision system 132, a route control system 131, and an obstacle avoidance system 137. The steering unit 136 may operate to adjust a heading direction of the vehicle 100. For example, in an embodiment, the steering unit 136 may be a steering wheel system. The throttle 135 is configured to control an operating speed of an engine 114 and further control a speed of the vehicle 100. The control system 130 may additionally or alternatively include another component other than those shown in FIG. 2. This is not specifically limited in this application.

The peripheral device 140 may be configured for the vehicle 100 to interact with an external sensor, another vehicle, and/or a user. Therefore, the peripheral device 140 may include, for example, a wireless communication system 144, a touchscreen 143, a microphone 142, and/or a speaker 141. The peripheral device 140 may additionally or alternatively include another component other than those shown in FIG. 2. This is not specifically limited in this application.

The power supply 150 may be configured to supply power to some or all components of the vehicle 100.

The vehicle-mounted computing platform 110 may be specifically implemented as a computer system having a processing capability. For example, the vehicle-mounted computing platform 110 may include a mobile data center (mobile data center, MDC).

The vehicle-mounted computing platform 110 may be configured to receive data from and control the sensor system 120, the control system 130, the peripheral device 140, and the like. The vehicle-mounted computing platform 110 may be further configured to display a generated image on the user interface 160, or receive an input from the user interface 160.

Some or all functions of the vehicle 100 are controlled by the vehicle-mounted computing platform 110. The vehicle-mounted computing platform 110 may include at least one processor 161. The processor 161 executes instructions 1631 stored in a non-transient computer-readable medium like a memory 163. The vehicle-mounted computing platform 110 may alternatively be a plurality of computing devices that control an individual component or a subsystem of the vehicle 100 in a distributed manner.

Optionally, the vehicle-mounted computing platform 110 may further include a transceiver 162, configured to implement communication between the vehicle-mounted computing platform 110 and another component in the vehicle 100 and/or configured to implement communication between the vehicle-mounted computing platform 110 and another device outside the vehicle 100.

The processor 161 may be any processor like a system-on-chip (System-on-Chip, SoC), a central processing unit (central processing unit, CPU), an application-specific integrated circuit (application-specific integrated circuit, ASIC), or another hardware-based dedicated processing device. Although FIG. 2 functionally illustrates the processor, the memory, and other elements, a person of ordinary skill in the art should understand that the processor and the memory may actually include a plurality of processors and memories that are stored in a same physical housing, or the processor and the memory may actually include a plurality of processors and memories that are not stored in a same physical housing. For example, the memory may be a hard disk drive or another storage medium located in a housing different from a housing of the vehicle-mounted computing platform 110. Therefore, a reference to the processor or the computer is understood as including a reference to a set of processors or memories that may or may not operate in parallel. Different from using a single processor to perform steps described herein, some components such as a steering component and a deceleration component may have respective processors. The processor performs only computation related to a component-specific function.

The processor 161 may have one or more areas. When the processor 161 includes a plurality of areas, running environments and data of different areas are isolated from each other. The area is specifically, for example, an operating system. For example, a plurality of different operating systems may simultaneously run on the processor 161.

The vehicle-mounted computing platform 110 may control the functions of vehicle 100 based on inputs received from various subsystems (for example, the sensor system 120 and the control system 130) and from the user interface 160.

Further, the vehicle-mounted computing platform 110 controls the functions of the vehicle 100. This may be implemented by running an application. Each processor 161 or an application in each area may access and control each element via the vehicle-mounted computing platform 110, to implement a function corresponding to the application. The function includes, for example, but is not limited to, intelligent driving, a reversing image, a call, and a sound.

During actual application, different applications have different functional safety requirements. As a provider of a basic capability, the vehicle-mounted computing platform provides a customized capability for the different applications. For example, the applications with different functional safety requirements are deployed in running environments at different safety levels, to meet the functional safety requirements of the different applications. If the applications are merely manually adjusted and deployed one by one, there are problems of high application development difficulty, low application deployment efficiency, and high labor costs.

In view of the foregoing factors, the technical solutions in embodiments of this application are provided. In the solutions, a software package format decoupled from applications on the vehicle-mounted computing platform is designed, so that the vehicle-mounted computing platform can deploy various applications in different processors or different areas in a process-based, standardized, and automatic manner. This can reduce the application development difficulty, improve application deployment efficiency, and reduce labor costs.

It should be noted that FIG. 1 and FIG. 2 are merely examples, and the technical solutions provided in embodiments of this application may be further applied to another device with a centralized electronic architecture. For ease of description, this specification mainly describes embodiments of this application in detail by using the scenarios shown in FIG. 1 and FIG. 2 as examples.

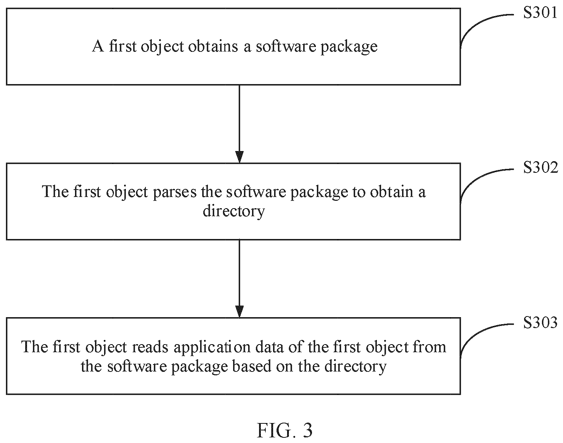

FIG. 3 is a flowchart of a software package parsing method according to an embodiment of this application. The method includes steps S301 to S303.

S301: A first object obtains a software package.

In embodiments of this application, an object includes a processor, an area, or another body that can parse the software package. This is not limited in this application. The first object is any one of at least one object in a carrier. For example, the first object is a processor or an area of a processor. The carrier may be any apparatus or platform on which software is to be installed.

It may be understood that, when the first object is an area of a processor, the first object may be identified by using both a processor identifier and an area identifier, or may be identified by using only an area identifier. This is not limited in this application. For example, different processors have different processor identifiers, but areas of the different processors may reuse a same area identifier. In this case, the areas of the different processors need to be distinguished by using the processor identifiers and the area identifier. For example, areas of different processors cannot reuse same area identifiers. In this case, the areas of the different processors and different areas of a same processor may be distinguished by using the area identifiers.

In a possible design, the object includes a processor on a vehicle-mounted computing platform or an area of the processor. For example, the first object is an SoC on the vehicle-mounted computing platform, or the first object is an operating system of the SoC on the vehicle-mounted computing platform.

Further, that the first object obtains the software package may be specifically that the vehicle-mounted computing platform receives the software package from a server of an application provider through a communication interface (for example, a vehicle-mounted box (T-Box)), or the vehicle-mounted computing platform receives, from a user interface, the software package input by a user, or the like. This is not limited in this application.

Generally, a vehicle-mounted computing platform provider may install basic software of the vehicle-mounted computing platform and a user software package in a fixed partition when the platform is delivered from a factory. In an over-the-air (over-the-air, OTA) process of a vehicle, the software package on the vehicle-mounted computing platform may be updated. The software package in this embodiment of this application may be a software package installed when the vehicle-mounted computing platform is delivered from a factory, or may be a software package obtained through upgrading by the vehicle in the OTA process. This is not limited in this application.

In a possible design, the at least one object includes a plurality of areas, and different areas in the plurality of areas correspond to different safety levels.

The safety level of the area may indicate a functional safety capability that can be provided by the area. For example, a higher safety level of an area indicates a higher functional safety capability of the area, and the area is suitable for deploying an application having a high functional safety requirement.

Functional safety may be understood as absence of unreasonable risk due to hazards caused by malfunctioning behavior of electrical/electronic systems (absence of unreasonable risk due to hazards caused by malfunctioning behavior of E/E systems).

A higher functional safety capability provided by an area indicates lower risk due to hazards caused by malfunctioning behavior of electrical/electronic systems existing when an application runs in the area, or a lower degree of risk due to hazards caused by malfunctioning behavior of electrical/electronic systems existing when an application runs in the area.

In a specific example, the safety level may be an automotive safety integrity level (automotive safety integrity level, ASIL) defined by the international organization for standardization (international organization for standardization, ISO) 26262, and four levels are included: ASIL-A, ASIL-B, ASIL-C, and ASIL-D. ASIL-A is the lowest safety integrity level that may minimize the unreasonable risk due to hazards caused by malfunctioning behavior of electrical/electronic systems of a vehicle (which may represent the lowest functional safety capability). ASIL-D is the highest safety integrity level that may maximize the unreasonable risk due to hazards caused by malfunctioning behavior of electrical/electronic systems of a vehicle (which may represent the highest functional safety capability).

The functional safety requirement (or referred to as a requirement on functional safety) of an application may be understood as a requirement of the application on a functional safety capability of a running environment of the application during deployment.

Generally, a higher functional safety requirement of an application indicates lower unreasonable risk due to hazards caused by malfunctioning behavior of electrical/electronic systems expected by the application. If an application has a higher requirement on the functional safety capability of an area, the application needs to be deployed in a running environment at a higher safety level.

For example, the area is an operating system on the vehicle-mounted computing platform. The operating system may be divided into different areas based on security levels corresponding to the operating systems, for example, two areas: a secure execution area (secure executable environment, SEA) and a general execution area (general executable environment, GEA). The SEA is used to provide a running environment with a high functional safety capability, for example, an ASIL-B running environment, and is mainly used to deploy an application having a high computing power requirement and a high functional safety requirement. The GEA is used to provide a running environment with a low functional safety capability, for example, an ASIL-A running environment, and is mainly used to deploy an application having a low computing power requirement and a low functional safety requirement.

Division into the SEA and the GEA may help the application provider deploy the application according to the functional safety requirement of the application, thereby improving user experience and vehicle performance.

It should be understood that division into the SEA and the GEA herein is merely an example rather than a limitation. During actual application, there may be division into more areas of other types. This is not limited in this application.

The software package includes application data of the at least one object.

The application data includes but is not limited to the following three types.

### (1) Application set corresponding to the at least one object

The application set indicates installation data of applications in the software package. For example, the application set includes an identifier of at least one application, and the identifier is, for example, a name (for example, test_app or demo_app) of the application or a number of the application. The applications may include an application automatically pulled by using an execution manager (Execution Manager, EM), an application manually pulled (pulled) by using an EM, an application pulled in another manner, or the like. This is not limited in this application.

In some possible implementations, the application may alternatively be referred to as a process. The application set may be an application list, a file including application information, or data in another format.

### (2) Software data corresponding to an application

The software data corresponding to an application is one type of installation data of the application, and is mainly an executable file (bin), a public library (lib), and the like that correspond to the application. The executable file includes but is not limited to an executable file used when the application is started, used, or manually debugged.

### (3) Configuration information related to an application set

The configuration information related to an application set may include configuration information corresponding to each application in the application set. The configuration information corresponding to each application is one type of installation data of the application.

For example, the configuration information corresponding to each application includes but is not limited to one or more of the following: a configuration file (conf) of the application, a startup script (script) of the application, another file (etc) of the application, and the like.

It may be understood that, in some implementations, one piece of configuration information may correspond to a plurality of different applications.

The software package further includes a directory. The directory indicates a location of the application data of each object in the at least one object in the software package.

The location of the application data of each object in the software package includes, for example, a storage path of the software data and a storage path of the configuration information.

In a possible design, the directory includes a first-type directory and a second-type directory. The first-type directory includes indication information that points to the second-type directory of the first object. The second-type directory includes the application data. It may be understood that the application data herein may be some or all of the application data. This is not limited. For example, the second-type directory includes at least the application set and the configuration information related to the application set. This design can improve efficiency of searching for the application data by the object.

Optionally, the indication information is a link, a pointer, or indication information of another type.

Optionally, an initial value of the first-type directory is empty or 0. Before the first object reads the application data of the first object from the software package based on the directory, the first object first writes the indication information into the first-type directory based on a configuration of the first object. In this way, in a subsequent process of reading the application data of the first object from the software package, the first object may find, based on the indication information in the first-type directory, the second-type directory corresponding to the first object.

The configuration of the first object may be specifically an identifier of the first object, for example, a processor identifier, an area identifier, a processor identifier and an area identifier, or the like.

In a possible design, one vehicle-mounted computing platform includes a plurality of SoCs and one microcontroller unit (microcontroller unit, MCU). Each SoC is communicatively connected to the MCU. The MCU may transfer a unique identifier to each SoC as a processor identifier of the SoC. Each SoC may identify the software package based on the received identifier, and determine, from the software package, application data corresponding to the SoC. Further, when there are a plurality of areas in the SoC, each area may also determine, from the software package based on an area identifier of the area, application data corresponding to the area.

For ease of understanding, an example in which the at least one object is four objects is used herein. The four objects are respectively a GEA in an SoC 0, an SEA in the SoC 0, a GEA in an SoC 1, and an SEA in the SoC 1. In the software package, there are two first-type directories: gea and sea, and there are four second-type directories: gea_a, gea_b, sea_a, and sea_b. Table 1 is an example of a possible directory format.

**Table 1**

| Directory | Description |
|---|---|
| gea_a (second-type directory) | Is used to store an application set in the GEA in the SoC 0 and configuration information related to the application set. |
| gea_b (second-type | Is used to store an application set in the GEA in the SoC 1 and |
| directory) | configuration information related to the application set. |
| gea (first-type directory) | Is initially empty, and points to gea_a or gea_b after indication information is written. |
| sea_a (second-type directory) | Is used to store an application set in the SEA in the SoC 0 and configuration information related to the application set. |
| sea_b (second-type directory) | Is used to store an application set in the SEA in the SoC 1 and configuration information related to the application set. |
| sea (first-type directory) | Is initially empty, and points to sea_a or sea_b after indication information is written. |

In a possible design, the second-type directory further includes software data of each object in the at least one object. The foregoing four objects are still used as an example. Table 2 is an example of another possible directory format.

**Table 2**

| Directory | Description |
|---|---|
| gea_a (second-type directory) | Is used to store an application set in the GEA in the SoC 0, configuration information related to the application set, and software data. |
| gea_b (second-type directory) | Is used to store an application set in the GEA in the SoC 1, configuration information related to the application set, and software data. |
| gea (first-type directory) | Is initially empty, and points to gea_a or gea_b after indication information is written. |
| sea_a (second-type directory) | Is used to store an application set in the SEA in the SoC 0, configuration information related to the application set, and software data. |
| sea_b (second-type directory) | Is used to store an application set in the SEA in the SoC 1, configuration information related to the application set, and software data. |
| sea (first-type directory) | Is initially empty, and points to sea_a or sea_b after indication information is written. |

In an alternative design, the second-type directory further includes indication information of a third-type directory of each object in the at least one object, and the third-type directory of each object points to software data of the object.

Optionally, the indication information may be a link or a pointer. Certainly, this is merely an example rather than a limitation. During actual application, the indication information may alternatively be in another form.

The foregoing four objects are still used as an example. Table 3 is an example of another possible directory format.

**Table 3**

| Directory | Description |
|---|---|
| entity_gea (third-type directory) | Points to software data in the GEA. |
| gea_a (second-type directory) | Is used to store an application set in the GEA in the SoC 0, configuration information related to the application set, and indication information pointing to entity_gea. |
| gea_b (second-type directory) | Is used to store an application set in the GEA in the SoC 1, configuration information related to the application set, and indication information pointing to entity_gea. |
| gea (first-type directory) | Is initially empty, and points to gea_a or gea_b after indication information is written. |
| entity_sea (third-type directory) | Points to software data in the SEA. |
| sea_a (second-type directory) | Is used to store an application set in the SEA in the SoC 0, configuration information related to the application set, and indication information pointing to entity_sea. |
| sea_b (second-type directory) | Is used to store an application set in the SEA in the SoC 1, configuration information related to the application set, and indication information pointing to entity_sea. |
| sea (first-type directory) | Is initially empty, and points to sea_a or sea_b after indication information is written. |

In a possible example, there are a plurality of objects in the at least one object. Third-type directories of at least two of the plurality of objects are the same, or indication information of third-type directories of at least of the second-type directory is the same. In this way, the software data placed in the software package may be used by the plurality of objects. This can effectively reduce data redundancy caused by distributing different software packages to different objects.

It should be noted that the directory formats listed in Table 1, Table 2, and Table 3 are merely examples rather than limitations. During actual application, the directory may be flexibly extended based on a specific situation of an object on the vehicle-mounted computing platform. For example, when there are three SoCs on the vehicle-mounted computing platform, one gea_c directory and one sea_c directory may be added to the second-type directory, and so on.

In a possible design, at least some subdirectories in the third-type directory may be the same as at least some subdirectories in the second directory. However, same data is stored only in the third-type directory or the second-type directory.

For example, a subdirectory A exists in both the third-type directory and the second-type directory, but a link for jumping to the subdirectory A in the third-type directory is stored in the subdirectory A in the second-type directory, and the subdirectory A in the third-type directory points to software data.

For example, a subdirectory B exists in both the third-type directory and the second-type directory, but configuration information is stored in the subdirectory B in the second-type directory, and the subdirectory B in the third-type directory is empty.

For ease of understanding, a detailed example is provided herein, as shown in Table 4.

**Table 4**

| |
|---|
| \|-- gea |
| \|-- entity_gea |
| \| \|-- bin |
| \| \|-- conf |
| \| \|-- lib |
| \| \|-- machine |
| \| \|---manual_service |
| \| \| '-- test_app |
| \| \| \|-- bin |
| \| \| \|-- conf |
| \| -- etc |
| \| \|---runtime_service |
| \| \| '-- demo_app_1 |
| \| \| \|-- bin |
| \| \| \|-- conf |
| \| '-- etc |
| \| \| '-- demo_app_2 |
| \| \| \|-- bin |
| \| \| \|-- conf |
| \| \| '-- etc |
| \| \| '-- demo_app_3 |
| \| \| \|-- bin |
| \| \| \|-- conf |
| \| \| -- etc |
| \|\|---script |
| \|-- gea_a |
| \| \|-- bin->../../entity_gea/bin |
| \| \|-- conf |
| \| \|-- lib->../../entity_gea/lib |
| \| \|-- machine |
| \| \|---manual_service |
| \| \| '-- test_app |
| \| \| \|-- bin->../../../entity_gea/manual_service/test_app/bin |
| \| \| \|-- conf |
| \| \| -- etc |
| \| \|---runtime_service |
| \| \| '-- demo_app_1 |
| \| \| \|-- bin->../../../entity_gea/runtime_service/demo_app_1/bin |
| \| \| \|-- conf |
| \| \| -- etc |
| \| \| '-- demo_app_2 |
| \| \| \|-- bin->../../../entity_gea/runtime_service/demo_app_2/bin |
| \| \| \|-- conf |
| \| \|---script |
| \|-- gea_b |
| \| \|-- bin->../../entity_gea/bin |
| \| \|-- conf |
| -- lib->../../entity_gea/lib |
| \| \|-- machine |
| \| \|---manual_service |
| \| \| '-- test_app |
| \| \| \|-- bin->../../../entity_gea/manual_service/test_app/bin |
| \| \| \|-- conf |
| \| \| '-- etc |
| \| \|---runtime_service |
| \| \| '-- demo_app_1 |
| \| \| \|-- bin->../../../entity_gea/runtime_service/demo_app_1/bin |
| \| \| \|-- conf |
| \| \| -- etc |
| \| \| '-- demo_app_3 |
| \| \| \|-- bin->../../../entity_gea/runtime_service/demo_app_3/bin |
| \| \| \|-- conf |
| \| \|---script |

The subdirectories in Table 4 are described in Table 5.

**Table 5**

| Subdirectory | Description |
|---|---|
| \| \|-- bin | Path for storing application data of a process (or an application) that is pulled in a manner other than using an EM |
| \| \|-- conf | Path for storing a configuration file of a process (or an application) that is pulled in a manner other than using an EM |
| \| \|-- lib | Path for storing a public library |
| \| \|-- machine | Path for storing application data of a process (or an application) that is pulled by using an EM |
| \| \|---manual_service | Path for storing application data of a process (or an application) that is manually pulled by using an EM |
| \| \| '-- test_app | Application identifier of a process (or an application) that is manually pulled by using an EM |
| \| \| \|-- bin | Path for storing an executable file of a process (or an application) that is manually pulled by using an EM |
| \| \| \|-- conf | Path for storing a configuration file of a process (or an application) that is manually pulled by using an EM |
| \| \| -- etc | Path for storing another file of a process (or an application) that is manually pulled by using an EM |
| \| \|---runtime_service | Path for storing application data of a process (or an application) that is automatically pulled by using an EM |
| \| \| '-- demo_app | Application identifier of a process (or an application) that is automatically pulled by using an EM |
| \| \| \|-- bin | Path for storing an executable file of a process (or an application) that is automatically pulled by using an EM |
| \| \| \|-- conf | Path for storing a configuration file of a process (or an application) that is automatically pulled by using an EM |
| \| \| '-- etc | Path for storing another file of a process (or an application) that is automatically pulled by using an EM |
| \| \|---script | Path for storing a startup script of a process (or an application) that is pulled by using an EM |

It can be learned from Table 4 that a directory structure of the third-type directory (for example, entity_gea) is the same as that of the second-type directory (for example, gea_a or gea_b), but entity_gea is different from gea_a or gea_b: A link for jumping to the bin directory in entity_gea, for example, "../../../entity_gea/runtime_service/demo_app_1/bin" (not directly pointing to the executable file), is in the bin directory in gea_a or gea_b, and a link for jumping to the lib directory in entity_gea, for example, "../../entity_gea/bin" (not directly pointing to the public library), is stored in the lib directory in gea_a or gea_b, while the bin directory and the lib directory in entity_gea actually point to the executable file and the public library respectively. The executable file to which the bin directory in entity_gea points is a set of the executable file corresponding to gea_a and the executable file corresponding to gea_b. The executable file to which the lib directory in entity_gea points is a set of the public library corresponding to gea_a and the public library corresponding to gea_b. For example, both gea_a and gea_b have demo_app_1. In this case, only one piece of data is stored in entity_gea for demo_app_1, and bin in demo_app_1 in gea_a and bin in demo_app_1 in gea_b point to a same location in entity_gea, namely, "entity_gea/runtime_service/demo_app_1/bin".

It should be noted that a link in any bin in gea_a or gea_b may point to bin at a same location in entity_gea (for example, bin in test_app in manual_service in gea_a points to bin in test_app in manual_service in entity_gea), or may point to bin at another location (for example, bin in test_app in manual_service in gea_a may alternatively point to bin in entity_gea). This is not limited in this application.

The directory structure provided in Table 4 is merely an example rather than a limitation.

In this design manner, the directory structure of the software package can be tidier and simpler, and redundant data can be reduced.

It may be understood that, in the directory structure listed above, an example in which the at least one object is the plurality of objects is used. During actual application, when the vehicle-mounted computing platform is a single processor or a single area, the directory structure may be further simplified.

For example, Table 6 is a diagram of a single-area directory structure. All raw files in the single-area directory are stored in entity_gea, and gea_a and gea_b have only links that point to corresponding files in the entity_gea directory.

**Table 6**

| |
|---|
| \|-- gea |
| \| \|-- bin |
| \| \|-- conf |
| \| \|-- lib |
| \| \|-- machine |
| \| \|-- manual_service |
| \| \| '-- test_app |
| \| \| \|-- bin |
| \| \| \|-- conf |
| \| \| '-- etc |
| \| \|-- runtime_service |
| \| \| '-- demo_app |
| \| \| \|-- bin |
| \| \| \|-- conf |
| \| \| '-- etc |
| \| \|-- script |

S302: The first object parses the software package to obtain the directory.

For example, when the vehicle-mounted computing platform is started (including cold start and warm start), an SoC (which may be specifically an area in the SoC, and the area may be an area that is first started on the vehicle-mounted computing platform) on the vehicle-mounted computing platform performs a mounting action on the software package, and then identifies the software package by using a file system driver (an ext2 driver, an ext3 driver, an ext4 driver, or the like), to read the directory of the software package. When areas in the SoC are started, an action of filling the first-type directory is separately performed on the software package.

It may be understood that, in a common operating system (for example, a Lynux system), all files are placed in a tree directory structure with a root directory as a tree root. After the first object obtains the software package, the software package is not in the tree directory structure in an initial state. The first object performs the mounting action by finding a location in the tree directory to establish a mount point, and mounts the software package to the location, so that the area in the SoC can subsequently access the software package from the mount point and read the directory of the software package.

S303: The first object reads the application data of the first object from the software package based on the directory.

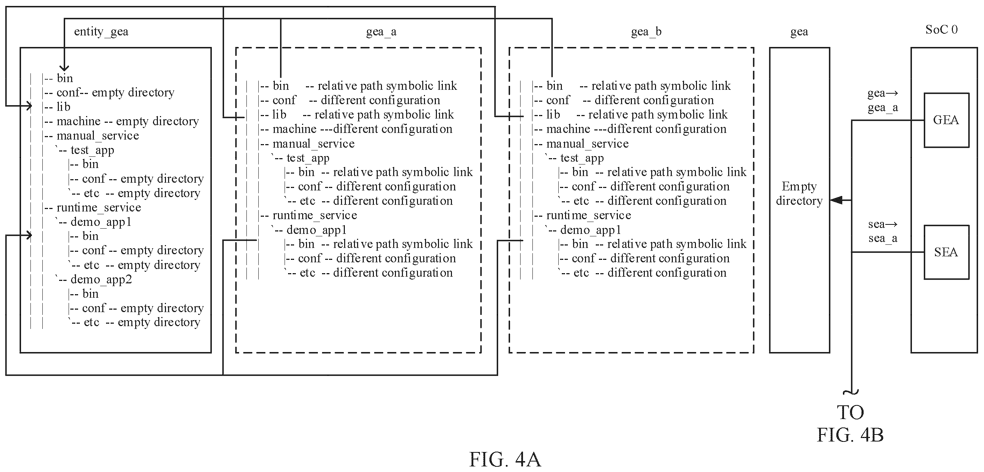

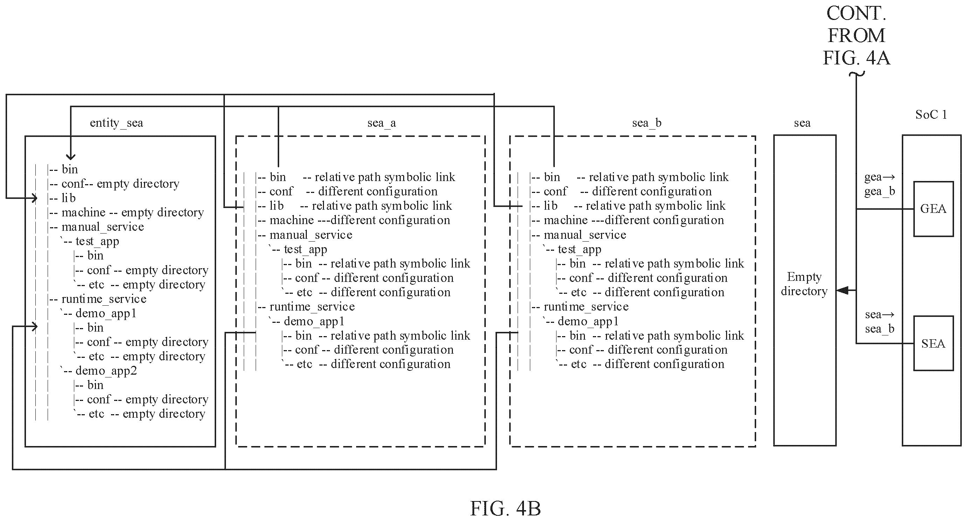

The foregoing four objects (namely, the GEA in the SoC 0, the SEA in the SoC 0, the GEA in the SoC 1, and the SEA in the SoC 1, and the first object may be any one of the four objects) are still used as examples. FIG. 4A and FIG. 4B are a diagram of reading the application data from the software package by the objects. It may be understood that the GEA in the SoC 0, the SEA in the SoC 0, the GEA in the SoC 1, and the SEA in the SoC 1 respectively correspond to different second-type directories (namely, gea_a, sea_a, gea_b, and sea_b). In FIG. 4A and FIG. 4B, to clearly show a difference between gea_a, sea_a, gea_b, and sea_b, different configuration information in gea_a, sea_a, gea_b, and sea_b is represented by "different configuration", for example, conf and machine. In addition, in FIG. 4A and FIG. 4B, an example in which the indication information that points to the third-type directory and that is in the second-type directory is a link, namely, a "relative path symbolic link" is used. This is not limited in practice.

After the software package is obtained, the GEA in the SoC 0 may write indication information of gea_a into the gea directory based on a configuration of the GEA. After software package installation is started, the GEA in the SoC 0 finds the gea_a directory based on the indication information of gea_a in the gea directory, reads configuration information (such as conf and test_app) from the gea_a directory, finds software data (such as the bin file and the lib file) in the entity_gea directory based on the link in the gea_a directory, and finally installs the application based on the obtained data.

After the software package is obtained, the SEA in the SoC 0 may write indication information of sea_a into the sea directory based on a configuration of the SEA. After software package installation is started, the SEA in the SoC 0 finds the sea_a directory based on the indication information of sea_a in the sea directory, reads configuration information (such as conf and test_app) from the sea_a directory, finds software data (such as the bin file and the lib file) in the entity_sea directory based on the link in the sea_a directory, and finally installs the application based on the obtained data.

After the software package is obtained, the GEA in the SoC 1 may write indication information of gea_b into the gea directory based on a configuration of the GEA. After software package installation is started, the GEA in the SoC 1 finds the gea_b directory based on the indication information of the gea_b in the gea directory, reads configuration information (such as conf and test_app) from the gea_b directory, finds software data (such as the bin file and lib the file) in the entity_gea directory based on the link in the gea_b directory, and finally installs the application based on the obtained data.

After the software package is obtained, the SEA in the SoC 1 may write indication information of sea_b into the sea directory based on a configuration of the SEA. After software package installation is started, the GEA in the SoC 1 finds the sea_b directory based on the indication information of sea_b in the sea directory, reads configuration information (such as conf and test_app) from the sea_b directory, finds software data (such as the bin file and the lib file) in the entity_sea directory based on the link in the sea_b directory, and finally installs the application based on the obtained data.

In the foregoing solution, the software package format includes the directory and the application data of the at least one object. When developing and deploying the application, the application provider may package the application data based on the software package format to form the software package. After obtaining the software package, any object may read application data corresponding to the object from the software package based on the directory. In this way, the vehicle-mounted computing platform may deploy various applications in different processors or areas in a process-based, standardized, and automatic manner, thereby reducing application development difficulty, improving application deployment efficiency, and reducing labor costs. In addition, when applications on the vehicle-mounted computing platform are upgraded subsequently, some applications on the vehicle-mounted computing platform may be separately upgraded by using this solution, without affecting another application. In addition, when application data of a single application in the software package crashes abnormally, application data of another application is not affected, and normal operation of the vehicle-mounted computing platform is not affected.

In a possible design, the software package includes an app partition and a signature partition. The directory and the application data are located in the app partition, and the signature partition is used to store a signature. Correspondingly, after obtaining the software package, the first object may further read the signature in the signature partition, and verify integrity and safety of the software package based on the signature. After confirming that the software package is complete and safe, the first object installs the application. For example, when the vehicle-mounted computing platform is started (including cold start and warm start), the processor first performs signature verification on the software package, and after the signature verification succeeds, mounts the software package, reads a directory of the software package, and so on.

In a specific example, the signature may include one or more of a platform signature, an application provider signature, a user signature, and the like. This is not limited in this application. A vehicle-mounted scenario is used as an example. The platform signature may be a signature of the vehicle-mounted computing platform, the application provider signature may be a signature of a merchant that provides an application service on the vehicle-mounted computing platform, and the user signature may be a signature of a vehicle owner.

The user signature is used as an example. A user performs hash calculation on content in a user app partition to obtain a first hash digest, and signs the first hash digest. A result of signing is placed at a location of a user signature header in a digital signature additional field. When loading a user software package, the vehicle-mounted computing platform performs calculation again on the content in the user app partition to obtain a second hash digest, obtains the signed first hash digest by using a work license, and compares the first hash digest with the second hash digest. If the first hash digest is the same as the second hash digest, integrity and safety of the user software package can be ensured.

This can improve reliability of application deployment.

In a possible design, the signature partition may further include information indicating a type and/or a size of the signature in the signature partition. For example, a secondary header is set at the beginning of the signature partition to indicate the type and/or the size of the signature in the signature partition.

This can improve efficiency and accuracy of parsing the software package by the first object.

The methods provided in embodiments of this application are described above with reference to the accompanying drawings. Apparatuses provided in embodiments of this application are described below with reference to the accompanying drawings.

Based on a same technical concept, an embodiment of this application provides a software package parsing apparatus 500. The software package parsing apparatus 500 includes a module/unit/means used to perform the method performed by the first object in the foregoing method embodiments. The module/unit/means may be implemented by using software, or may be implemented by using hardware, or may be implemented by hardware by executing corresponding software.

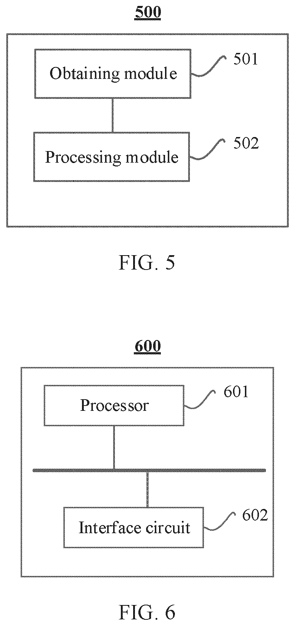

For example, refer to FIG. 5. The software package parsing apparatus 500 may include:
an obtaining module 501, configured to obtain a software package, where the software package includes a directory and application data of at least one object, the directory indicates a location of application data, of each object in the at least one object, in the software package, the application data includes an application set corresponding to the at least one object, related configuration information of the application set, and software data corresponding to each application in the application set, and the object includes a processor or an area; and
a processing module 502, configured to: parse the software package to obtain the directory, and read application data of a first object from the software package based on the directory, where the first object is any one of the at least one object.

It should be understood that all related content of the steps in the foregoing method embodiments may be cited in function descriptions of corresponding functional modules. Details are not described herein again.

Based on a same technical concept, refer to FIG. 6. An embodiment of this application further provides a software package parsing apparatus 600. The apparatus 600 includes at least one processor 601 and an interface circuit 602. The interface circuit 602 is configured to: receive a signal from another apparatus other than the apparatus 600, and transmit the signal to the processor 601, or send a signal from the processor 601 to another apparatus other than the apparatus. The processor 601 is configured to implement, by using a logic circuit or executing code instructions, the method performed by the first object in the foregoing method embodiments.

It should be understood that the processor mentioned in embodiments of this application may be implemented by using hardware or software. When the processor is implemented by using the hardware, the processor may be a logic circuit, an integrated circuit, or the like. When the processor is implemented by using the software, the processor may be a general-purpose processor, and is implemented by reading software code stored in the memory.

For example, the processor may be a central processing unit (central processing unit, CPU), or may be another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, a discrete hardware component, or the like. The general-purpose processor may be a microprocessor, or the processor may be any conventional processor or the like.

Based on a same technical concept, an embodiment of this application further provides a computer-readable storage medium, including a program or instructions. When the program or the instructions are run on a computer, the method performed by the first object in the foregoing method embodiments is performed.

Based on a same technical concept, an embodiment of this application further provides a computer program product, including instructions. The computer program product stores the instructions. When the instructions are run on a computer, the method performed by the first object in the foregoing method embodiments is performed.

Based on a same technical concept, an embodiment of this application further provides a terminal device, including the foregoing software package parsing apparatus. The terminal device may be a vehicle, a drone, a helicopter, an airplane, a ship, an intelligent transportation device, a smart home device, or the like. A specific form of the terminal device is not limited in embodiments of this application.

It may be understood that the memory mentioned in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random-access memory (random-access memory, RAM), used as an external cache. By way of example, and not limitation, many forms of RAMs may be used, for example, a static random-access memory (static RAM, SRAM), a dynamic random-access memory (dynamic RAM, DRAM), a synchronous dynamic random-access memory (synchronous DRAM, SDRAM), a double data rate synchronous dynamic random-access memory (double data rate SDRAM, DDR SDRAM), an enhanced synchronous dynamic random-access memory (enhanced SDRAM, ESDRAM), a synchronous link dynamic random-access memory (synchlink DRAM, SLDRAM), and a direct rambus dynamic random-access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) may be integrated into the processor.

It should be noted that the memory described in this specification aims to include but is not limited to these memories and any memory of another proper type.

The foregoing descriptions are merely some embodiments of this application. It is clear that a person skilled in the art may make various modifications and variations to this application without departing from the protection scope of this application. This application is intended to cover these modifications and variations to this application provided that they fall within the scope of protection defined by the following claims and their equivalent technologies.

## Claims

1. A software package parsing method, comprising:
obtaining, by a first object, a software package, wherein the software package comprises a directory and application data of at least one object, the directory indicates a location of application data, of each object in the at least one object, in the software package, the application data comprises an application set corresponding to the at least one object, related configuration information of the application set, and software data corresponding to each application in the application set, and the object comprises a processor or an area;
parsing, by the first object, the software package to obtain the directory; and
reading, by the first object, application data of the first object from the software package based on the directory, wherein the first object is any one of the at least one object.

2. The method according to claim 1, wherein the directory comprises a first-type directory and a second-type directory, the first-type directory comprises indication information that points to the second-type directory of the first object, and the second-type directory comprises the application data.

3. The method according to claim 2, wherein before the reading, by the first object, application data of the first object from the software package based on the directory, the method further comprises:
writing, by the first object, the indication information into the first-type directory based on a configuration of the first object.

4. The method according to claim 2 or 3, wherein the second-type directory further comprises indication information of a third-type directory of each object in the at least one object, and the third-type directory of each object points to software data of the object.

5. The method according to claim 4, wherein there are a plurality of objects in the at least one object, and at least two of the plurality of objects have a same third-type directory.

6. The method according to any one of claims 1 to 5, wherein the at least one object comprises a plurality of areas, and different areas in the plurality of areas correspond to different safety levels.

7. The method according to any one of claims 1 to 6, wherein the software package comprises an application APP partition and a signature partition, the directory is located in the app partition, and the signature partition is used to store a signature; and
the method further comprises:
reading, by the first object, the signature in the signature partition, and verifying integrity and safety of the software package based on the signature.

8. The method according to claim 7, wherein the signature comprises one or more of a platform signature, an application provider signature, and a user signature; and
the signature partition further comprises information indicating a type and/or a size of the signature in the signature partition.

9. The method according to any one of claims 1 to 8, wherein the object comprises a processor on a vehicle-mounted computing platform or an area of the processor.

10. A software package parsing apparatus, comprising:
an obtaining module, configured to obtain a software package, wherein the software package comprises a directory and application data of at least one object, the directory indicates a location of application data, of each object in the at least one object, in the software package, the application data comprises an application set corresponding to the at least one object, related configuration information of the application set, and software data corresponding to each application in the application set, and the object comprises a processor or an area; and
a processing module, configured to:
parse the software package to obtain the directory; and
read application data of the first object from the software package based on the directory, wherein the first object is any one of the at least one object.

11. The apparatus according to claim 10, wherein the directory comprises a first-type directory and a second-type directory, the first-type directory comprises indication information that points to the second-type directory of the first object, and the second-type directory comprises the application data.

12. The apparatus according to claim 11, wherein the processing module is further configured to:
before reading the application data of the first object from the software package based on the directory, write the indication information into the first-type directory based on a configuration of the first object.

13. The apparatus according to claim 11 or 12, wherein the second-type directory further comprises indication information of a third-type directory of each object in the at least one object, and the third-type directory of each object points to software data of the object.

14. The apparatus according to claim 13, wherein there are a plurality of objects in the at least one object, and at least two of the plurality of objects have a same third-type directory.

15. The apparatus according to any one of claims 10 to 14, wherein the at least one object comprises a plurality of areas, and different areas in the plurality of areas correspond to different safety levels.

16. The apparatus according to any one of claims 10 to 15, wherein the software package comprises an application APP partition and a signature partition, the directory is located in the app partition, and the signature partition is used to store a signature; and
the processing module is further configured to:
read the signature in the signature partition, and verify integrity and safety of the software package based on the signature.

17. The apparatus according to claim 16, wherein the signature comprises one or more of a platform signature, an application provider signature, and a user signature; and
the signature partition further comprises information indicating a type and/or a size of the signature in the signature partition.

18. The apparatus according to any one of claims 10 to 17, wherein the object comprises a processor on a vehicle-mounted computing platform or an area of the processor.

19. A processing apparatus, comprising at least one processor and an interface circuit, wherein
the interface circuit is configured to: receive a signal from another apparatus other than the apparatus and transmit the signal to the processor, or send a signal from the processor to another apparatus other than the apparatus, and the processor is configured to implement the method according to any one of claims 1 to 9 by using a logic circuit or executing code instructions.

20. A terminal device, comprising the apparatus according to any one of claims 10 to 18.

21. A vehicle, comprising the terminal device according to claim 20.

22. A computer-readable storage medium, wherein the readable storage medium is configured to store instructions, and when the instructions are executed, the method according to any one of claims 1 to 9 is implemented.
